# EUROPEAN PATENT APPLICATION

(11) **EP 2 299 672 A1**
(43) Date of publication of application: **23.03.2011**
(21) Application number: 09817801.5
(22) Date of filing: 30.09.2009
(51) Int. Cl.: H04M 3/56, G06F 13/00, H04M 3/00

(54) **NETWORK SYSTEM, COMMUNICATION DEVICE, COMMUNICATION METHOD, AND COMMUNICATION PROGRAM**

(30) Priority: 02.10.2008 JP 2008257331
(71) Applicant: Sharp Kabushiki Kaisha, Osaka-shi, Osaka 545-8522 (JP)
(72) Inventor: AKABANE, Toshio, Osaka 545-8522 (JP); SAKAI, Tatsuya, Osaka 545-8522 (JP)
(74) Representative: Treeby, Philip David William
(86) International application number: PCT/JP2009/067014
(87) International publication number: WO 2010/038769

(57) **Abstract**

A communication device (100A) includes: a memory (103-1) for storing first and second identification information for identifying the communication device (100A) and another communication device (100B); a creation unit (1061-1) for creating a room name based on at least one of the first and second identification information; and a communication control unit (1062-1) for connecting to the other communication device in accordance with the second identification information, and for transmitting a creation request to a server device to create a room having the room name for allowing the communication device and the other communication device to exchange information. The communication control unit is operative in response to a first external instruction to transmit a deletion request through a communication interface (101-1) to the server device (400) to delete the room having the room name.

## Description

### TECHNICAL FIELD

The present invention relates to network systems, communication devices, communication methods and communication programs including a plurality of communication devices mutually connectable on a network and a server device, and particularly to network systems, communication devices, communication methods and communication programs allowing the communication devices to communicate data with each other in response to being called by one communication device via a room created in the server device.

### BACKGROUND ART

In a chat system utilizing a conventional Internet Protocol (IP) connection, communication devices participating in a chat need to simultaneously start a chat application and perform IP connection. More specifically, a user who desires IP connection to another communication device needs to obtain identification information of the other communication device. For example, users belonging to the same group use their own respective communication devices to enter the same chat room in a server and thus exchange their mutual identification information.

Accordingly, the user of a communication device that calls for IP connection needs to create a room in the server for exchanging mutual identification information with each other, and call up a partner user, inform a partner user of a room name, and the like. Furthermore, for the users of communication devices to obtain their mutual states (or requests), the communication devices must each start an application for communication and thus be connected to a network.

For example, a Peer to Peer (P2P) system is known as a direct data (message) exchange system between communication devices connectable to the Internet network. In the P2P system, the user of a communication device needs to use a telephone, mail and/or the like or face a partner user to directly determine a time scheduled to start P2P communication. Furthermore, the users need to know their mutual identification information for P2P communication, and before the time to start P2P communication arrives, each user needs to connect a communication device to a network (the Internet), and in that condition, any one or both of the users needs/need to start P2P communication via the communication device(s).

To resolve cumbersomeness of a process in a chat system (P2P communication), it is necessary to depend on a dedicated server (chat server), utilize a mail system, or furthermore, utilize information obtained in a communication system for audio communication (or for calls) (i.e., a caller information or the like), or the like to exchange an invitation message urging an access to the chat server (or a chat room), information required for the chat system, and the like. The information required for the chat system includes: an IP address; the state of a terminal of interest (whether the terminal is in a manner mode); the user's state (whether the user is currently in a conference, on a train, a bus or currently utilizes a similar traffic system, and is thus urged to refrain from making a call); the user's intention (the user's response to being called for a chat); and the like.

Cumbersomeness of a process required in a direct data exchange system is resolved for example by a chat system as disclosed in Japanese Patent Laying-open No. 2004-199134 (patent document 1). More specifically, the document describes that when a chat server establishes a new chat room, it urges one user to input an electronic mail address of another user urged to enter the chat room, or urges one user to select from previously registered user information an electronic mail address of another user urged to enter the chat room, and after the chat room is established, the chat server transmits mail to the electronic mail address to notify the other user that the chat room has been established. When the owner of the chat room and the other user do not have their personal computers interconnected such that they can share the chat room, the user can be informed that the chat room has been established, and the user can actively be urged to enter the chat room to reduce a wasteful waiting time.

Furthermore, Japanese Patent Laying-open No. 2002-278903 (patent document 2) discloses an information processor. More specifically, the document describes that peer to peer communication is done through connection adapted to be established, as follows: for example a personal computer that desires communication transmits electronic mail with the personal computer's IP address attached thereto to a desired destination of communication, e.g., another personal computer, and the other personal computer opens the electronic mail and obtains the IP address attached to the electronic mail.

Furthermore, Japanese Patent Laying-open No. 2003-91494 (patent document 3) discloses a chat system. More specifically, the document discloses a chat system in which mobile phones are connected to a chat server and thus have a chat therebetween, wherein an electronic mail (a chat invitation mail) is transmitted to urge a mobile phone that is disconnected from the chat server to connect to the chat server (or to participate in the chat). When the user of the mobile phone having received the chat invitation mail accepts connecting to the chat server (or participating in the chat), the mobile phone is automatically connected to the chat server and thus become chattable.

Furthermore, Japanese Patent Laying-open No. 2002-132694 (patent document 4) discloses a chat system. More specifically, the document discloses that a first user of a mobile phone notifies a server of a telephone number of a mobile phone of a second user with whom the first user desires to have a chat, and the first user requests the chat. In response, the server transmits a request for a chat to the mobile phone of the second user. The second user receives the request for the chat, and responds thereto depending on his/her convenience. If the second user permits the request, the server transmits the permission of the request to the requester and transmits a list of all participants to the participants, and a chat mode is established. When the server receives messages from the participants, the server transmits the messages to all of the participants, and displays the contents of the messages on a display of the mobile phone of each participant. The second user can participate in the chat amid the chat.

Furthermore, Japanese Patent Laying-open No. 2003-174520 (patent document 5) discloses a mobile communication terminal. More specifically, the document discloses that a mobile phone is set in a manner mode preventing the mobile phone from generating a ringing tone. When a user of one mobile phone makes an outgoing call to another mobile phone, the other mobile phone alerts its user to the incoming call by a vibrator or the like, and the other mobile phone obtains the caller mobile phone's originating telephone number information and automatically severs the incoming call. The other mobile phone uses the above originating telephone number information to automatically transmit a previously registered or created message via a chat mail to the caller mobile phone. The mobile phones have a normal chat mail operation started, and thereafter, the caller and called mobile phones both repeat receiving and transmitting chat mail and thus have conversation using characters.

Furthermore, Japanese Patent Laying-open No. 2004-247862 (patent document 6) discloses a mobile phone and a mobile phone system. More specifically, the document discloses that a mobile phone performing wireless communication on a wireless communication network has means for setting a manner mode, means for sending setting information of the manner mode to a base station, means for receiving manner mode setting information of the mobile phone of a partner of communication from the base station when the partner's mobile phone is set in the manner mode, means for changing a call mode when the manner mode setting information is received, means for storing the partner's name, telephone number, and electronic mail address, and means for searching for an electronic mail address from a telephone number.

Furthermore, Japanese Patent Laying-open No. 2006-140664 (patent document 7) discloses a mobile phone terminal and a mobile phone communication system. More specifically, the document discloses that a user previously registers for each of communication partners A, B and C in a transmission preference column of a symbol of a telephone book memory a preference among a plurality of communication functions operated when the user provides a transmission to the partner. In providing a transmission, when the user designates partner A and performs a transmission operation, a transmission preference for partner A, e.g., "TV telephone → audio telephone → chat → mail", is applied to start these communication functions, set an address and provide the transmission automatically.

Furthermore, Japanese Patent Laying-open No. 2007-96486 (patent document 8) discloses a method for selecting a mobile communication system, and a mobile communication terminal device employed therein. More specifically, the document discloses that a caller mobile phone terminal sends an outgoing call signal associated with audio communication and a message for being displayed to a mobile phone terminal to be called. When the called mobile phone terminal receives the call, it reproduces a ringing tone or the like and also displays the message on a display screen automatically. The called party determines from the displayed message whether to receive the incoming call by audio communication or by a chat using characters, and the called party presses a key for selecting an audio mode or a key for selecting a conversation mode using characters. When the key for selecting the conversation mode using characters is pressed, the called mobile phone terminal transmits to the caller mobile phone terminal an automatic audio message indicating that the conversation mode using characters has been selected, and the called mobile phone terminal subsequently starts an operation for chatting using characters. The caller hears the automatic audio message and thereafter if the caller presses the key for selecting the conversation mode using characters, the caller mobile phone terminal also starts the operation for chatting using characters.

### PRIOR ART DOCUMENTS

### PATENT DOCUMENTS

Patent Document 1: Japanese Patent Laying-open No. 2004-199134
Patent Document 2: Japanese Patent Laying-open No. 2002-278903
Patent Document 3: Japanese Patent Laying-open No. 2003-91494
Patent Document 4: Japanese Patent Laying-open No. 2002-132694
Patent Document 5: Japanese Patent Laying-open No. 2003-174520
Patent Document 6: Japanese Patent Laying-open No. 2004-247862
Patent Document 7: Japanese Patent Laying-open No. 2006-140664
Patent Document 8: Japanese Patent Laying-open No. 2007-96486

### SUMMARY OF THE INVENTION

### PROBLEMS TO BE SOLVED BY THE INVENTION

Thus a large number of known techniques are employed in exchanging data required in performing P2P communication. Conventionally, however, it has been difficult to interrupt P2P communication once it has been called for. In other words, once a user of a communication device has called for P2P communication, the user cannot easily cancel the P2P communication.

The present invention has been made to overcome such disadvantage, and it contemplates a network system, a communication device, a communication method, and a communication program that can easily interrupt starting P2P communication having been called for.

### MEANS FOR SOLVING THE PROBLEMS

The present invention in one aspect provides a network system including first and second communication devices and a server device. The first communication device includes: a first communication interface for transmitting and receiving data to and from the second communication device and the server device via a network; a first memory for storing first and second identification information for identifying the first and second communication devices; a first creation unit for creating a room name based on at least one of the first and second identification information; and a first communication control unit for connecting to the second communication device through the first communication interface in accordance with the second identification information, and transmitting a creation request through the first communication interface to the server device to create a room having the room name for allowing the first and second communication devices to exchange information. The first communication control unit is operative in response to a first external instruction to transmit a deletion request through the first communication interface to the server device to delete the room having the room name. The server device includes: a server communication interface for transmitting and receiving data to and from the first and second communication devices via the network; a room creation unit operative in response to the creation request received from the first communication device for creating the room having the room name; and a room deletion unit operative in response to the deletion request received from the first communication device for deleting the room having the room name. The second communication device includes: a second communication interface for transmitting and receiving data to and from the first communication device and the server device via the network; a second memory for storing the first and second identification information; a second creation unit for creating a room name based on at least one of the first and second identification information when there is access by the first communication device; a second communication control unit for inquiring of the server device through the second communication interface whether the room having the room name exists in the server device; and an input device for receiving a second external instruction while the room exists. The second communication control unit is operative in response to the second external instruction to access the room having the room name through the second communication interface.

The present invention in another aspect provides a communication device including: a communication interface for transmitting and receiving data to and from another communication device and a server device via a network; a memory for storing first and second identification information for identifying the communication device and the other communication device; a creation unit for creating a room name based on at least one of the first and second identification information; and a communication control unit for connecting to the other communication device through the communication interface in accordance with the second identification information, and for transmitting a creation request through the communication interface to the server device to create a room having the room name for allowing the communication device and the other communication device to exchange information. The communication control unit is operative in response to a first external instruction to transmit a deletion request through the communication interface to the server device to delete the room having the room name.

Preferably, the creation unit creates the room name based on at least one of the first and second identification information when there is access by the other communication device, and the communication control unit inquires of the server device through the communication interface whether the room having the room name exists in the server device. The communication device further includes an input device for receiving a second external instruction while the room exists. The communication control unit is operative in response to the second external instruction to access the room having the room name through the communication interface.

The present invention in another aspect provides a communication device including: a communication interface for transmitting and receiving data to and from another communication device and a server device via a network; a memory for storing first and second identification information for identifying the communication device and the other communication device; a creation unit for creating a room name based on at least one of the first and second identification information when there is access by the other communication device; a communication control unit for inquiring of the server device through the communication interface whether a room having the room name exists in the server device; and an input device for receiving a second external instruction while the room exists. The communication control unit is operative in response to the second external instruction to access the room having the room name through the communication interface.

Preferably, the access by the other communication device is an incoming telephone call. The communication device further includes a notification unit for externally issuing a first notification while the room exists, and for externally issuing a second notification while the room does not exist. The input device externally receives a third external instruction for responding to an incoming telephone call when the room does not exist. The communication control unit operates in response to the third external instruction to control the communication interface for having a call with the other communication device.

The present invention in another aspect provides a communication method performed in a communication device for communicating with another communication device. The communication device includes a processor, a communication interface for transmitting and receiving data to and from the other communication device and a server device via a network, and a memory for storing first and second identification information for identifying the communication device and the other communication device. The method includes the steps of: the processor creating a room name based on at least one of the first and second identification information; the processor connecting to the other communication device through the communication interface in accordance with the second identification information; the processor transmitting a creation request through the communication interface to the server device to create a room having the room name for allowing the communication device and the other communication device to exchange information; and the processor operating in response to a first external instruction to transmit a deletion request through the communication interface to the server device to delete the room having the room name.

The present invention in another aspect provides a communication method performed in a communication device for communicating with another communication device. The communication device includes a processor, a communication interface for transmitting and receiving data to and from the other communication device and a server device via a network, and a memory for storing first and second identification information for identifying the communication device and the other communication device. The method includes the steps of: the processor creating a room name based on at least one of the first and second identification information when there is access by the other communication device; the processor inquiring of the server device through the communication interface whether a room having the room name exists in the server device; the processor receiving a second external instruction while the room exists; and the processor operating in response to the second external instruction to access the room having the room name through the communication interface.

The present invention in another aspect provides a communication program for causing a communication device to communicate with another communication device. The communication device includes a processor, a communication interface for transmitting and receiving data to and from the other communication device and a server device via a network, and a memory for storing first and second identification information for identifying the communication device and the other communication device. The communication program causes the processor to perform the steps of: creating a room name based on at least one of the first and second identification information; connecting to the other communication device through the communication interface in accordance with the second identification information; transmitting a creation request through the communication interface to the server device to create a room having the room name for allowing the communication device and the other communication device to exchange information; and operating in response to a first external instruction to transmit a deletion request through the communication interface to the server device to delete the room having the room name.

The present invention in another aspect provides a communication program for causing a communication device to communicate with another communication device. The communication device includes a processor, a communication interface for transmitting and receiving data to and from the other communication device and a server device via a network, and a memory for storing first and second identification information for identifying the communication device and the other communication device. The communication program causes the processor to perform the steps of: creating a room name based on at least one of the first and second identification information when there is access by the other communication device; inquiring of the server device through the communication interface whether the room having the room name exists in the server device; receiving a second external instruction while the room exists; and operating in response to the second external instruction to access the room having the room name through the communication interface.

### EFFECTS OF THE INVENTION

Thus the present invention can provide a network system, a communication device, a communication method, and a communication program that can easily interrupt starting P2P communication having been called for.

### BRIEF DESCRIPTION OF THE DRAWINGS

Fig. 1 is a schematic diagram generally showing a configuration of a network system according to the present embodiment.
Fig. 2 is a sequence diagram outlining an operation in the network system.
Fig. 3 represents a procedure of connecting in the network system.
Fig. 4 shows an appearance of a mobile phone.
Fig. 5 is a block diagram showing a hardware configuration of the mobile phone.
Fig. 6 represents address book data, data of a terminal of interest, and the IP address data of another terminal and the IP address data of the terminal of interest.
Fig. 7 is a block diagram showing a hardware configuration of a matching server 400.
Fig. 8A is a first representation of a data structure of a room management table.
Fig. 8B is a second representation of the data structure of the room management table.
Fig. 9 is a block diagram showing a functional structure of the network system.
Fig. 10 represents one example of a message (or a command) transmitted and received between the matching server and first and second mobile phones.
Fig. 11 is a flow chart of a procedure of a communication process in the mobile phone.
Fig. 12 is a flow chart of a procedure of an outgoing call process in the mobile phone.
Fig. 13 is a flow chart of a procedure of an outgoing TEL call process in the mobile phone.
Fig. 14 is a flow chart of a procedure of an outgoing P2P call process in the mobile phone.
Fig. 15 is a flow chart of a procedure of an incoming call process in the mobile phone.
Fig. 16 is a flow chart of a procedure of an incoming TEL call process in the mobile phone.
Fig. 17 is a flow chart of a procedure of an incoming P2P call process in the mobile phone.
Fig. 18 is a flow chart of a procedure of a response process in the matching server.

### MODES FOR CARRYING OUT THE INVENTION

Hereinafter reference will be made to the drawings to describe the present invention in an embodiment. In the following description, identical components are denoted by identical reference characters. Their names and functions are also identical. Accordingly, they will not be described repeatedly in detail.

Furthermore, hereinafter, a mobile phone 100 will be referred to as a representative example of a "communication device". However, the communication device may be a personal computer, a car navigation device (a satellite navigation system), a personal navigation device (PND), a personal data assistance (PDA) or other similar information communication equipment.

### <General Configuration of Network System 1>

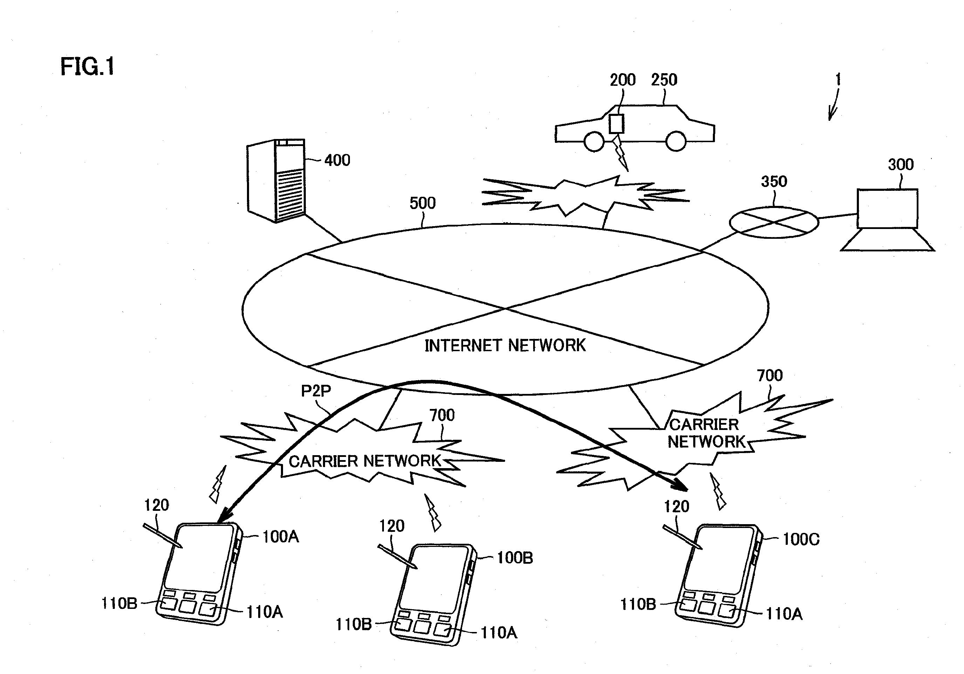

Initially, a network system 1 generally has a configuration, as will be described hereinafter. Fig. 1 is a schematic diagram showing a general configuration of network system 1 according to the present embodiment. With reference to Fig. 1, network system 1 includes mobile phones 100A, 100B and 100C, a matching server 400, an Internet network (a first network) 500, and a carrier network (a second network) 700. Furthermore, network system 1 according to the present embodiment includes a car navigation device 200 mounted in a vehicle 250, and a personal computer (PC) 300.

Note that, to facilitate description, hereinafter, network system 1 according to the present embodiment includes a first mobile phone 100A, a second mobile phone 100B, and a third mobile phone 100C. Furthermore, in describing a configuration, a function or the like common to mobile phones 100A, 100B and 100C, the mobile phones will also collectively be referred to as mobile phone 100. Furthermore, in describing a configuration, a function or the like common to mobile phones 100A, 100B and 100C, car navigation device 200, and personal computer 300, they will also collectively be referred to as a communication device.

Mobile phone 100 is configured to be connectable to carrier network 700. Car navigation device 200 is configured to be connectable to Internet network 500. Personal computer 300 is configured to be connectable through a local area network (LAN) 350, a wide area network (WAN) or the like to Internet network 500. Matching server 400 is configured to be connectable to Internet network 500.

More specifically, first mobile phone 100A, second mobile phone 100B, third mobile phone 100C, car navigation device 200, and personal computer 300 are interconnectable via carrier network 700, Internet network 500 and/or the like and capable of mutually transmitting and receiving data. Furthermore, mobile phone 100, car navigation device 200, and personal computer 300 are assigned identification information such as a telephone number, a mail address, an Internet protocol (IP) address or the like for identifying their own terminals. In other words, mobile phone 100, car navigation device 200, and personal computer 300 can each store identification information of the other communication devices in its internal storage medium and communicate data, as based on that identification information, with the other communication devices via carrier network 700, Internet network 500 and/or the like.

Note that mobile phone 100, car navigation device 200, and personal computer 300 according to the present embodiment use their assigned IP addresses to each communicate data with the other communication devices. Herein, when each communication device accesses matching server 400 i.e., when the communication device accesses the Internet, the communication device is assigned an IP address by matching server 400 or another server device (not shown) for the sake of illustration. The IP address is assigned in a process known in detail, and accordingly, how the IP address is assigned will not be described in detail.

Furthermore, mobile phone 100, car navigation device 200, and personal computer 300 according to the present embodiment can use their assigned IP addresses to directly, mutually communicate data on a network. That is, network system 1 according to the present embodiment includes mobile phone 100, car navigation device 200, and personal computer 300 capable of configuring a so-called pear-to-pear (P2P) type network.

### <Outlining How Network System 1 Operates>

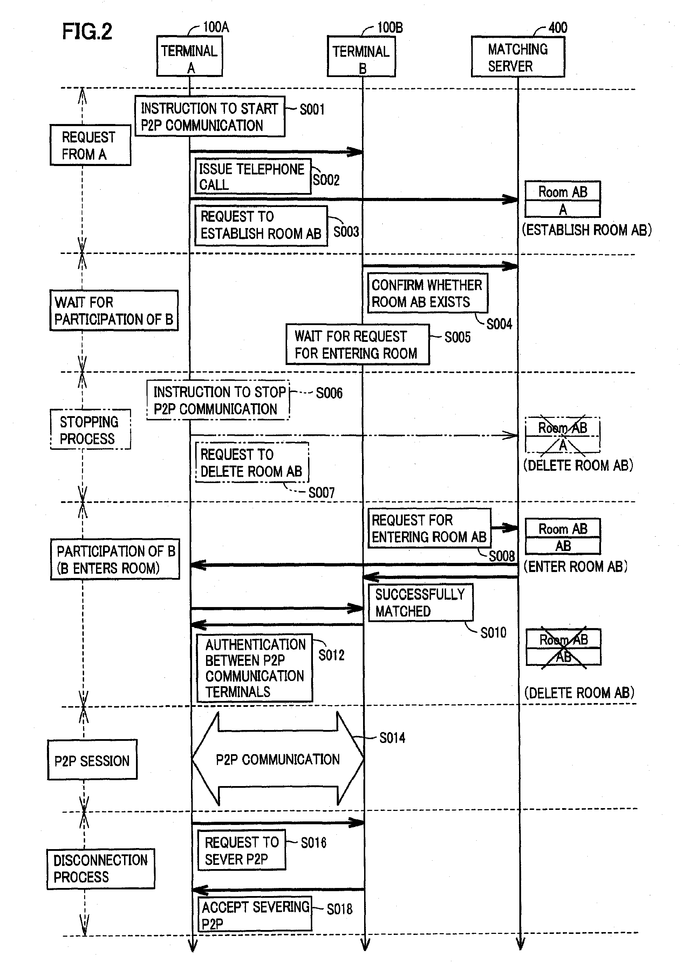

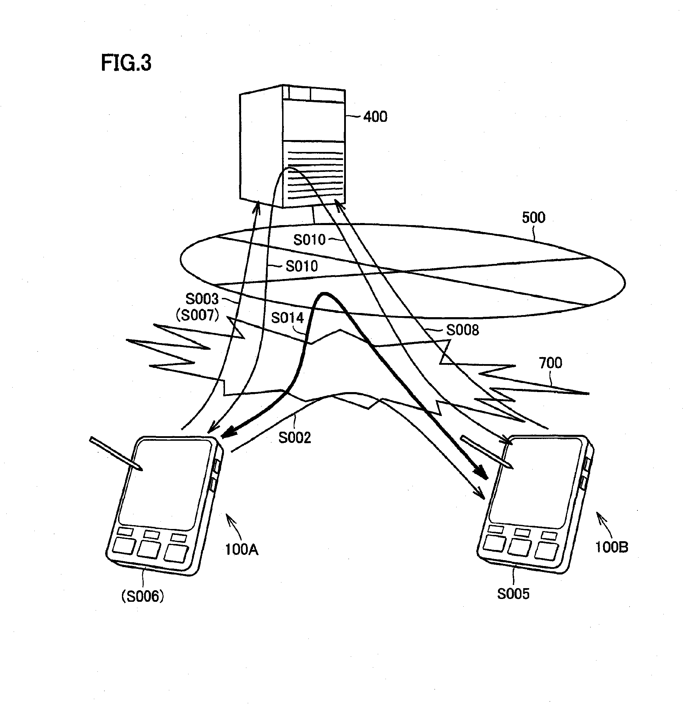

Network system 1 according to the present embodiment generally operates, as will be described hereinafter. Fig. 2 is a sequence diagram outlining how network system 1 operates. Fig. 3 represents a procedure of connecting in network system 1. With reference to Figs. 2 and 3, the communication devices according to the present embodiment first need to exchange (or obtain) their IP addresses mutually in order to perform P2P type data communication. Once each communication device has obtained mutual IP addresses, the communication device performs P2P type data communication based on the IP addresses to transmit a message, an attached file, and/or the like to the other communication devices.

In the present embodiment will be described an example where in starting P2P communication, communication devices each transmit and receive an IP address, a message, an attached file and/or the like via a chat room (hereinafter also simply be referred to as a "room") created in matching server 400. In particular, hereinafter will be described an example where first mobile phone 100A creates a new chat room and also invites second mobile phone 100B to that chat room.

Initially, first mobile phone 100A (indicated in Fig. 2 as a terminal A) receives an instruction input by the user for starting P2P communication (step S001). More specifically, the user of first mobile phone 100A selects a partner communication device (second mobile phone 100B) for P2P communication from an address book, and then inputs an instruction to start P2P communication. In response, first mobile phone 100A makes a telephone call to second mobile phone 100B (indicated in Fig. 2 as a terminal B) (step S002).

Then first mobile phone 100A transmits a request to matching server 400 to create (or establish) a new room (step 5003). More specifically, first mobile phone 100A creates a chat room name (hereinafter also simply be referred to as a "room name"), based on its own telephone number and that of second mobile phone 100B, in accordance with a predetermined rule. First mobile phone 100A transmits to matching server 400 a request including the room name to create a room. Matching server 400 receives the request including the room name, and establishes a room corresponding to the room name.

More specifically, first mobile phone 100A in establishing a room may obtain an IP address from matching server 400 or may obtain an IP address previously from another server or the like. Matching server 400 in creating the room associates the room name with identification information (the IP address or the like) of first mobile phone 100A and thus stores them.

Second mobile phone 100B receives the telephone call from first mobile phone 100A, and creates a room name, based on the telephone number of first mobile phone 100A and that of its own, in accordance with a predetermined role. Thus in the present embodiment network system 1 is configured to allow first mobile phone 100A and second mobile phone 100B to both create room names, based on the first and second mobile phones' telephone numbers, in accordance with a predetermined rule so that the first and second mobile phones create identical room names. It should be noted, however, that network system 1 is only required to be configured such that first and second mobile phones create identical room names, and network system 1 may not be configured to create a room name based on the first and second mobile phones' telephone numbers.

Second mobile phone 100B having created the room name inquires of matching server 400 whether a room corresponding to that room name exists in matching server 400 (step S004). If so, second mobile phone 100B waits for a second instruction from its user indicating entering the room (step 5005). Meanwhile, the user of first mobile phone 100A waits for second mobile phone 100B to start P2P communication.

In the present embodiment a communication device can receive an instruction input by a user to interrupt P2P communication and can interrupt calling for P2P communication. More specifically, when the user of first mobile phone 100A inputs an instruction to stop P2P communication (step S006), first mobile phone 100A issues a request to matching server 400 to delete room AB (step S007). Thus in the present embodiment network system 1 allows first mobile phone 100A to interrupt P2P communication before second mobile phone 100B enters room AB.

On the other hand, when the user of second mobile phone 100B inputs an instruction to enter the room, second mobile phone 100B issues a request to matching server 400 for entering room AB (a request for participation) (step S008). Matching server 400 receives the request and registers the identification information of second mobile phone 100B in association with the room name of room AB.

Then, when a previously set number of entrants enter room AB, matching server 400 notifies first mobile phone 100A and second mobile phone 100B that a matching process has successfully been done (step S010). In other words, matching server 400 transmits to first mobile phone 100A and second mobile phone 100B mutual identification information.

First mobile phone 100A and second mobile phone 100B use mutual identification information to authenticate each other (step S012). Once the authentication has been completed, first mobile phone 100A and second mobile phone 100B start P2P communication (step S014). When first mobile phone 100A transmits to second mobile phone 100B a message indicating that P2P communication will be severed (step S016), second mobile phone 100B transmits to first mobile phone 100A a message indicating that second mobile phone 100B has accepted the request to sever the communication (step S018). The P2P communication between first mobile phone 100A and second mobile phone 100B thus ends.

Such a function as described above will be implemented in a configuration, as will be described hereinafter more specifically.

### <Hardware Configuration of Mobile Phone 100>

Mobile phone 100 according to the present embodiment serving as one example of a communication device has a hardware configuration, as will be described hereinafter.

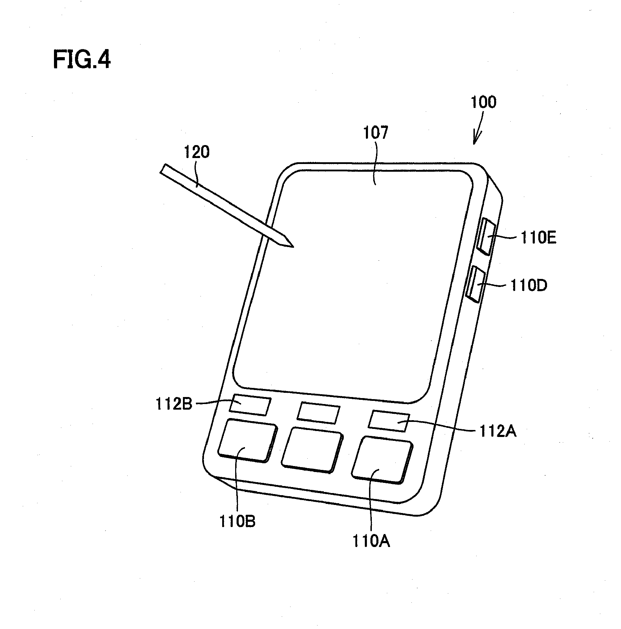

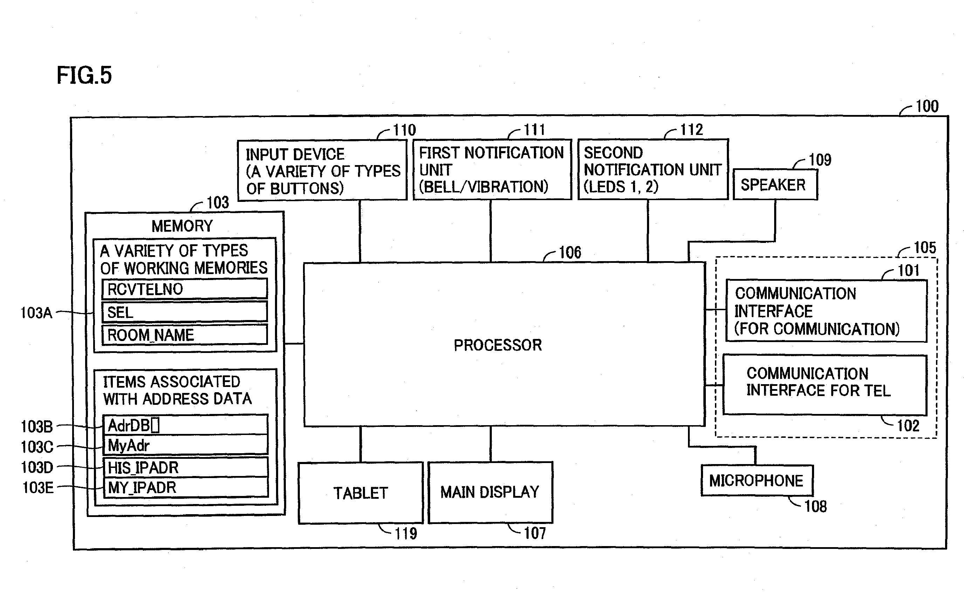

Fig. 4 generally shows an appearance of mobile phone 100 according to the present embodiment. Fig. 5 is a block diagram showing a hardware configuration of mobile phone 100 according to the present embodiment.

With reference to Figs. 4 and 5, mobile phone 100 according to the present embodiment includes a communication interface 101 communicating data with an external network, a communication interface 102 for TEL, a memory 103 storing a program and a variety of types of databases, a processor 106, a main display 107, a microphone 108 receiving external sound, a speaker 109 outputting sound, an input device 110 receiving a variety of types of information input, a first notification unit 111 I outputting audible notification indicating that externally communicated data, a call signal and/or the like have/has been received, and a second notification unit 112 displaying notification indicating that externally communicated data, a call signal and/or the like have/has been received. Note that communication interface 101 and communication interface 102 for TEL are configured for example of an antenna, a signal processing circuit and/or the like, and may be implemented by the same device (a communication interface 105).

Main display 107 according to the present embodiment is a touch panel configured of a liquid crystal panel, a CRT or the like. More specifically, mobile phone 100 according to the present embodiment is provided with a pen tablet 119 under (or at a back side of) main display 107. This allows a user to use a stylus pen 120 or the like to handwrite and thus input graphical information or the like through pen tablet 119 to processor 106. Main display 107 displays an image, a text and/or the like based on data output by processor 106.

Input device 110 receives information from a user for example operating a key for input. For example, input device 110 includes a TEL button 110A for receiving a telephone call and making a telephone call, a P2P button 110B for receiving P2P communication and sending P2P communication, an address book button 110D used to access address book data, and an end button 110E for terminating a variety of types of processes. That is, when P2P participation request mail is received via communication interface 102 for TEL, input device 110 selectably receives instructions input by a user to enter a chat room, display the mail's content(s), and the like.

First notification unit 111 outputs a ringer tone through speaker 109 or the like. Alternatively, first notification unit 111 has a vibration function. When an incoming call, P2P participation request mail and/or the like are/is received, first notification unit 111 outputs sound, vibrates mobile phone 100, and/or the like.

Second notification unit 112 includes a light emitting diode (LED) 112A for TEL, and an LED 112B for P2P. LED 112A for TEL flashes on/off when an incoming call arrives. LED 112B for P2P flashes on/off when P2P communication is received.

Processor 106 is implemented for example as a central processing unit (CPU) or the like and controls each component of mobile phone 100. For example, processor 106 receives a variety of types of instructions from a user via input device 110, and communicates data with an external communication device via communication interface 101, communication interface 102 for TEL, a network and/or the like.

Communication interface 101 and communication interface 102 for TEL, or communication interface 105, receive data to be communicated from processor 106 and convert the data to a communication signal, and send the signal from an antenna (not shown). Communication interface 101 and communication interface 102 for TEL, or communication interface 105, receive a communication signal through the antenna and convert the signal to communicated data, and input the data to processor 106.

Memory 103 is implemented as: random access memory (RAM) functioning as working memory; read only memory (ROM) storing a control program or the like; a hard disk storing image data or the like; and the like. Memory 103 has a variety of work memory 103A, which includes an RCVTELNO area storing an originator's telephone number, an SEL area storing the memory number of an address selected, and a ROOMNAME area storing a room name created.

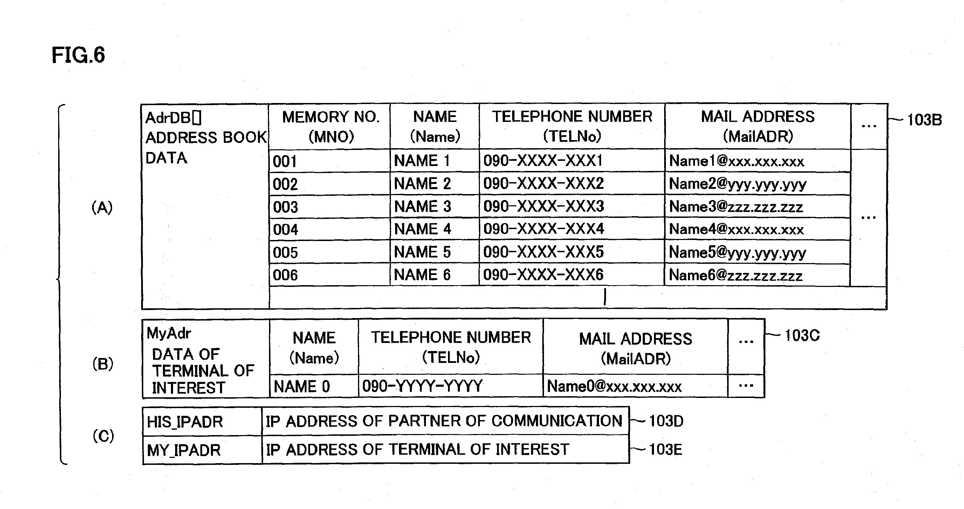

Fig. 6 represents data stored in memory 103. More specifically, Fig. 6(A) represents address book data 103B stored in memory 103. Fig. 6(B) represents data 103C of a terminal of interest stored in memory 103. Fig. 6(C) represents IP address data 103D of the terminal of interest and IP address data 103E of the terminal of interest, stored in memory 103.

With reference to Fig. 6(B), address book data (AdrDB[]) 103B associates a memory number for each destination (or for each other communication device). Address book data 103B associates a name, a telephone number, a mail address, a nickname and the like with one another for each destination, and thus stores them.

With reference to Fig. 6(C), data (MyAdr) 103C for the terminal of interest stores the name of the user of the terminal of interest, the telephone number of the terminal of interest, the mail address of the terminal of interest, a nickname, and the like.

With reference to Fig. 6(D), IP address data (HIS_IPADR) 103D of the other terminal stores the IP address of the other terminal. IP address data (MY_IPADR) 103E of the terminal of interest stores the IP address of the terminal of interest.

### <Hardware Configuration of Matching Server 400>

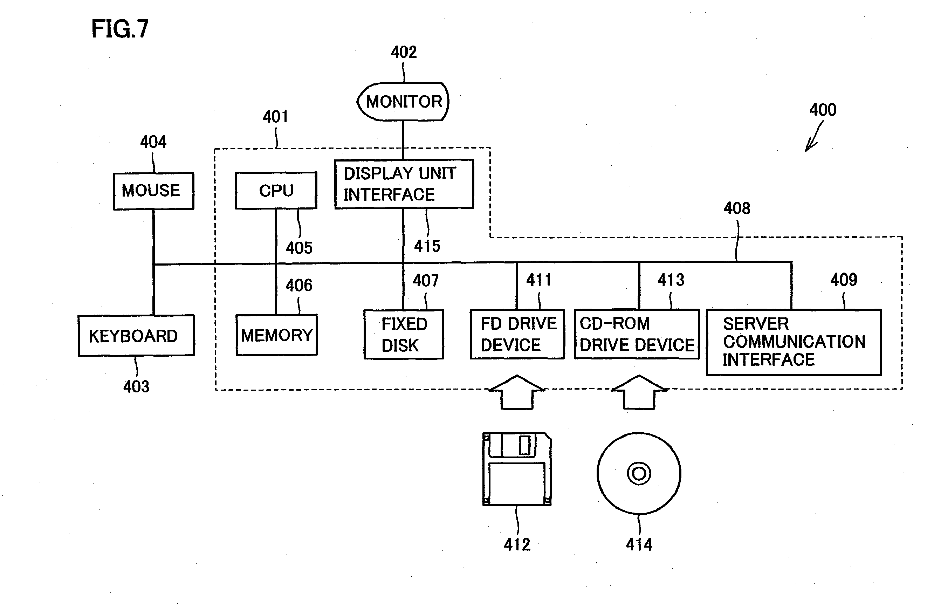

The present embodiment provides matching server 400 having a hardware configuration, as will be described hereinafter. Fig. 7 is a block diagram showing a hardware configuration of matching server 400 according to the present embodiment. With reference to Fig. 7, matching server 400 according to the present embodiment includes a CPU 405, a memory 406, a fixed disk 407, and a server communication interface 409 interconnected by an internal bus 408.

Memory 406 stores a variety of types of information, and for example temporarily stores data required for execution of a program in CPU 405. Fixed disk 407 stores a program executed by CPU 405, a database, and the like. CPU 405, which controls each element of matching server 400 and mail server 600, is a device performing a variety of types of operations.

Server communication interface 409 receives data output from CPU 405, converts the data to an electrical signal, and externally transmits the signal. Server communication interface 409 also converts an externally received electrical signal to data and inputs the data to CPU 405. More specifically, server communication interface 409 receives data from CPU 405 and transmits the data on Internet network 500, carrier network 700, and/or the like to mobile phone 100, car navigation device 200, personal computer 300 and/or the like. Server communication interface 409 also receives data via Internet network 500, carrier network 700 and/or the like from mobile phone 100, car navigation device 200, personal computer 300 and/or the like and inputs the data to CPU 405.

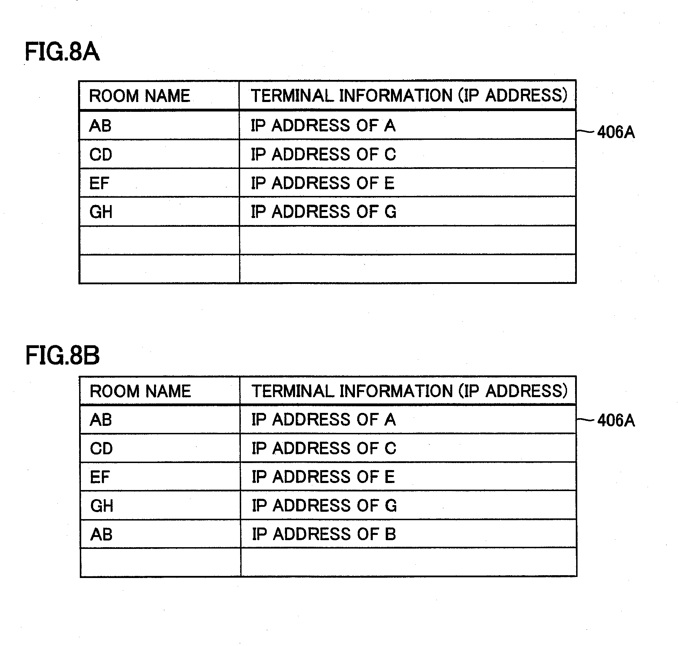

What data memory 406 or fixed disk 407 has stored therein will be described hereinafter. Fig. 8A is a first representation of a data structure of a room management table 406A stored in matching server 400 at memory 406 or fixed disk 407. Fig. 8B is a second representation of the data structure of room management table 406A stored in matching server 400 at memory 406 or fixed disk 407.

With reference to Fig. 8A and Fig. 8B, room management table 406A associates a room name for each room with identification information of any communication device(s) currently in the room and thus stores them. For example, at a point in time, with reference to Fig. 8A, chat rooms having room names AB, CD EF and GH, respectively, are created in matching server 400.

In the present embodiment, room name AB is determined by a communication device A from the telephone number of communication device A and that of communication device B. Room name CD is determined by a communication device C from the telephone number of communication device C and that of communication device D. Room name EF is determined by a communication device E from the telephone number of communication device E and that of communication device F. Room name GH is determined by a communication device G from the telephone number of communication device G and that of communication device H.

In the chat room with room name AB is communication device A. Accordingly, room management table 406A associates the IP address of communication device A with room name AB and thus stores them. In the chat room with room name CD is communication device C. Accordingly, room management table 406A associates the IP address of communication device C with room name CD and thus stores them. In the chat room with room name EF is communication device E. Accordingly, room management table 406A associates the IP address of communication device E with room name EF and thus stores them. In the chat room with room name GH is communication device G. Accordingly, room management table 406A associates the IP address of communication device G with room name GH and thus stores them.

When communication device B additionally enters the chat room having room name AB, then, with reference to Fig. 8B, room management table 406A associates the IP address of communication device B with room name AB and thus stores them.

For example, when matching server 400 receives a request from first mobile phone 100A to create a new chat room (as indicated in Fig. 2 at step S002), matching server 400 obtains a room name from the request, and then associates that room name with the IP address of first mobile phone 100A and thus stores them in room management table 406A. Then, when second mobile phone 100B requests matching server 400 to allow second mobile phone 100B to enter a chat room (as indicated in Fig. 2 at step S008), CPU 405 associates that room name with the IP address of second mobile phone 100B and thus stores them in room management table 406A.

Then, once the number of IP addresses corresponding to the room name has reached a preset number, or once a preset time has elapsed since the room was created, CPU 405 reads from room management table 406A the IP address of first mobile phone 100A, that of second mobile phone 100B and the like associated with that room name. CPU 405 transmits the IP address of first mobile phone 100A to each second communication device, and transmits the IP address of second mobile phone 100B to first mobile phone 100A.

### < Functional Configuration of Network System 1>

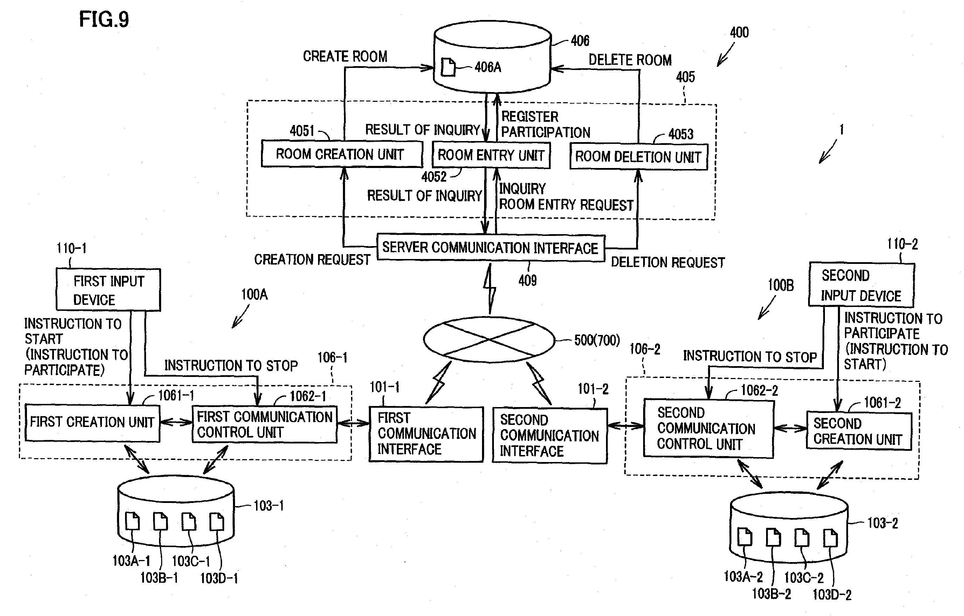

Fig. 9 is a block diagram showing a functional configuration of network system 1 according to the present embodiment. With reference to Fig. 9, network system 1 according to the present embodiment includes first mobile phone 100A, second mobile phone 100B, Internet network 500, and matching server 400.

First mobile phone 100A includes a first communication interface 101-1, a first creation unit 1061-1, a first communication control unit 1062-1, a first memory 103-1, and a first input device 110-1. Second mobile phone 100B includes a second communication interface 101-2, a second creation unit 1061-2, a second communication control unit 1062-2, a second memory 103-2, and a second input device 110-2. Matching server 400 includes server communication interface 409, a room creation unit 4051, a room entry unit 4052, a room deletion unit 4053, and memory 406.

### (Function of Matching Server 400)

Initially, matching server 400 has a function, as will be described hereinafter. As has been described previously, memory 406 has room management table 406A stored therein.

Server communication interface 409 communicates data with first mobile phone 100A, second mobile phone 100B, and the like via Internet network 500, carrier network 700, and/or the like. For example, server communication interface 409 receives from first mobile phone 100A a request to create a new room (a creation request), a request to delete a room (a deletion request), and the like. Furthermore, server communication interface 409 receives from second mobile phone 100B a request for a search to inquire whether a room exists (a search request), a request for entering a room (a room entry request), and the like.

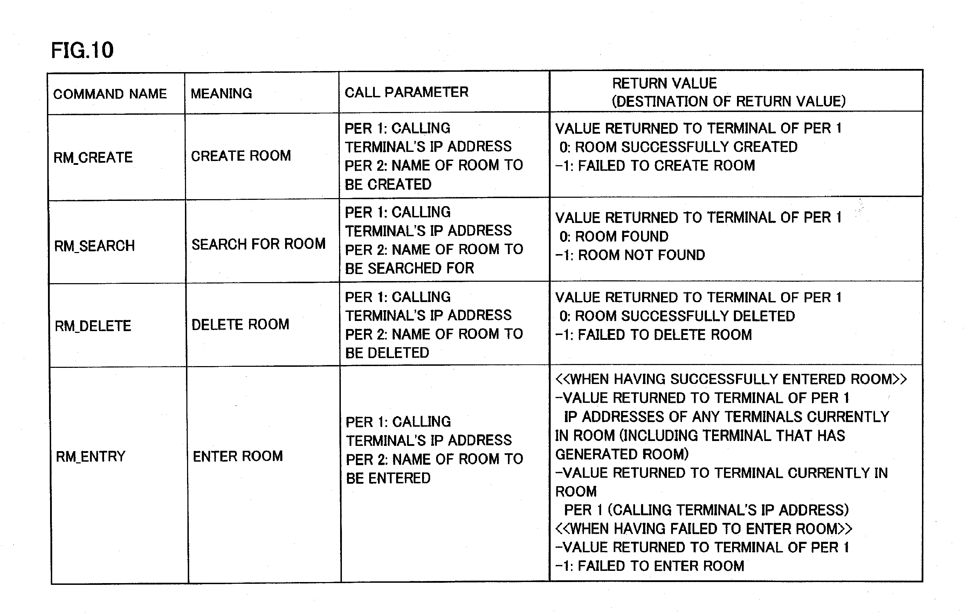

Fig. 10 represents one example of a message (or a command) communicated between matching server 400 and first mobile phone 100A and second mobile phone 100B. With reference to Fig. 10, the creation request is a message for a request to create a room, and its command name is "RM CREATE". First mobile phone 100A transmits as the creation request the IP address of first mobile phone 100A and a room name of a room to be created. Matching server 400 receives the request, and, as will be described hereinafter, creates a new room corresponding to the room name. Matching server 400 returns to first mobile phone 100A a message indicating whether the room has successfully been created.

The search request is a message for a request to search for a room, and its command name is "RM SEARCH". Second mobile phone 100A transmits as the search request the IP address of first mobile phone 100A and a room name to be searched for. Matching server 400 receives the request, and, as will be described hereinafter, determines whether the room name is stored in room management table 406A. Matching server 400 returns a message indicating whether a room having the room name exists.

The deletion request is a message for a request to delete a room, and its command name is "RM DELETE". First mobile phone 100A transmits as the deletion request the IP address of first mobile phone 100A and the room name of a room to be deleted. Matching server 400 receives the request and deletes the room corresponding to the room name from room management table 406A. Matching server 400 returns a message indicating whether the room has successfully been deleted.

The room entry request is a message for entering a room, and its command name is "RM_ENTRY". Second mobile phone 100A transmits as the room entry request the IP address of second mobile phone 100A and a room name of a room to be entered. Matching server 400 receives the request and associates the IP address of second mobile phone 100B with the room name and thus stores them to room management table 406A. Matching server 400 returns a message indicating whether the mobile phone has achieved successful entry into the room.

Referring again to Fig. 9, room creation unit 4051, room entry unit 4052 and room deletion unit 4053 are functions exhibited by the matching server 400 CPU 405 executing a program stored in memory 406, fixed disk 407, and/or the like to control each hardware shown in Fig. 7. For example, each function of CPU 405 is implemented by CPU 405 once reading a program that is stored in fixed disk 407 into memory 406, and reading that program from memory 406, while sequentially executing the program.

Room creation unit 4051 receives a creation request from second mobile phone 100B through server communication interface 409. Room creation unit 4051 responds to the request by creating a new room having a room name included in the request. More specifically, room creation unit 4051 associates the room name with the IP address of first mobile phone 100A and thus stores them to room management table 406A.

Room entry unit 4052 receives from second mobile phone 100B through server communication interface 409 an inquiry of whether a chat room having a room name is present or absent. Room entry unit 4052 determines whether the room name is stored in room management table 406A. Room entry unit 4052 transmits a result of the determination through server communication interface 409 to second mobile phone 100B.

Furthermore, room entry unit 4052 receives a request from second mobile phone 100B through server communication interface 409 for entering a chat room. Room entry unit 4052 responds to the request by storing the IP address of second mobile phone 100B to room management table 406A in association with a room name included in the request. When a predetermined condition for the room is satisfied, room entry unit 4052 transmits to each communication device currently in the room the IP address(es) of the other communication device(s) currently in the room.

Note that the predetermined condition corresponds for example to: that the number of IP addresses associated with a room name has reached a preset number; that a preset time has elapsed since a room was created; and the like.

Room deletion unit 4053 receives a request from first mobile phone 100A through server communication interface 409 to delete a chat room having a room name. Room deletion unit 4053 responds to the request by deleting data associated with that room name in room management table 406A, or by setting on a deletion flag corresponding to the room name in room management table 406A.

### (Function of First Mobile Phone 100A)

First mobile phone 100A has a function, as will be described hereinafter. First communication interface 101-1 is implemented by communication interface 101 or communication interface 102 for TEL (or communication interface 105) of first mobile phone 100A. First memory 103-1 is implemented by memory 103 of first mobile phone 100A. First input device 110-1 is implemented by input device 110 of first mobile phone 100A. First creation unit 1061-1 and first communication control unit 1062-1 are functions exhibited by the first mobile phone 100A processor 106 executing a program stored in memory 103 to control each hardware shown in Fig. 5.

First memory 103-1 stores first identification information (a telephone number, a mail address, an IP address and the like) for identifying first mobile phone 100A, and second identification information (a telephone number, a mail address, an IP address and the like) for identifying second mobile phone 100B. More specifically, first memory 103-1 has address book data 103B, its terminal's data 103C, its terminal's IP address data 103D, its terminal's IP address data 103E, and the like stored therein.

First creation unit 1061-1 receives a start instruction from a user through first input device 110-1 to start P2P communication. More specifically, the user selects from the address book a communication device to be a partner in P2P communication, and inputs that P2P communication will be started. The start instruction includes a memory number or the like of the address book. First creation unit 1061-1 responds to the start instruction by creating a new room name based on its own telephone number and that of another terminal (or second mobile phone 100B).

First communication control unit 1062-1 transmits a creation request through first communication interface 101-1 to matching server 400 to create a new chat room. Then, first communication control unit 1062-1 makes a telephone call (or an outgoing call) to second mobile phone 100B, based on the telephone number of second mobile phone 100B, through first communication interface 101-1 and via carrier network 700. Furthermore, first communication control unit 1062-1 receives an instruction from the user through first input device 110-1 to interrupt connection of P2P communication, and transmits a deletion instruction through first communication interface 101-1 to matching server 400 to delete (or close) a room corresponding to a room name.

### (Function of Second Mobile Phone 100B)

Second mobile phone 100B has a function, as will be described hereinafter. Second communication interface 101-2 is implemented by communication interface 101 1 or communication interface 102 for TEL (or communication interface 105) of second mobile phone 100B. Second memory 103-2 is implemented by memory 103 of second mobile phone 100B. Second input device 110-2 is implemented by input device 110 of second mobile phone 100B. Second creation unit 1061-2 and second communication control unit 1062-2 are functions exhibited by the second mobile phone 100B processor 106 executing a program stored in memory 103 to control each hardware shown in Fig. 5.

Second memory 103-2 stores second identification information (a telephone number, a mail address, an IP address and the like) for identifying second mobile phone 100B, and first identification information (a telephone number, a mail address, an IP address and the like) for identifying first mobile phone 100A. More specifically, first memory 103-1 has address book data 103B, its terminal's data 103C, its terminal's IP address data 103D, its terminal's IP address data 103E, and the like stored therein.

Second communication control unit 1062-2 and second creation unit 1061-2 receives a telephone call (incoming) from first mobile phone 100A through second communication interface 101-2. Second creation unit 1061-2 responds to the incoming call by creating a new room name based on the telephone number of first mobile phone 100A and its own telephone number. Second communication control unit 1062-2 inquires of matching server 400 through second communication interface 101-2 whether a chat room corresponding to the room name exists.

If a chat room corresponding to the room name exists, second communication control unit 1062-2 causes the Fig. 5 first notification unit 111, second notification unit 112 and the like to operate to inform the user that he/she is called for P2P communication, and second communication control unit 1062-2 waits for an input from the user through second input device 110 indicating whether P2P communication is started. If the chat room corresponding to the room name does not exist, second communication control unit 1062-2 causes the Fig. 5 first notification unit 111, second notification unit 112 and the like to operate to inform the user that he/she is called for a telephone call.

If the chat room corresponding to the room name exists, second input device 110-2 receives an instruction to start P2P communication, or an instruction to enter the room. In response to the instruction to enter the room, second communication control unit 1062-2 transmits a request through second communication interface 101-2 to matching server 400 for entering the room. Second communication control unit 1062-2 can thus obtain the IP address of a partner's communication device from matching server 400 and is thus capable of performing P2P communication through second communication interface 101-2.

First mobile phone 100A may have not only a function that invites a partner in P2P communication to a chat room but also a function allowing first mobile phone 100A to be invited to a chat room like second mobile phone 100B. On the contrary, second mobile phone 100B may have not only a function allowing second mobile phone 100B to be invited by a partner in P2P communication to a chat room but also a function that invites a partner to a chat room like first mobile phone 100A.

More specifically, when first communication control unit 1062-1 receives a telephone call from second mobile phone 100B through first communication interface 101-1, first creation unit 1061-1 creates a room name based on the telephone numbers of first and second mobile phones. First communication control unit 1062-1 inquires of matching server 400 whether a chat room corresponding to the room name exists. If so, first input device 110-1 waits for an instruction received from the user on whether to respond to P2P communication. On the other hand, if the chat room exists, first input device 110-1 waits for an instruction received from the user on whether to respond to the telephone call.

### (Creating a Room Name)

First creation unit 1061-1 and second creation unit 1061-2 operate to create a room name in a method, as will be described hereinafter.

For example, first creation unit 1061-1 creates a room name constituted of a first telephone number of first mobile phone 100A and a second telephone number of second mobile phone 100B that are simply aligned. Since a telephone number is data unique to a terminal, the room name constituted of the aligned first and second telephone numbers is data unique to a group and does not overlap other groups' room names.

Alternatively, first creation unit 1061-1 may create a room name constituted of other identification information (a mail address, a nickname and the like) corresponding to the telephone number of first mobile phone 100A and other identification information of second mobile phone 100B that are arranged in alphabetical order.

Furthermore, first creation unit 1061-1 may use a hash function or the like to encrypt and then align the first telephone number and the second telephone number to create a room name. Network system 1 according to the present embodiment does not require restoring original data. Accordingly, the telephone numbers are encrypted preferably in a method that prevents the original data from being easily restored. For example, it is preferable to encrypt the telephone numbers by an irreversible function.

In network system 1 according to the present embodiment, second creation unit 1061-2 creates a room name by a method similar to that used for first creation unit 1061-1. Thus, second mobile phone 100B invited can create a room name for itself. That is, the user of first mobile phone 100A does not need to notify the user of second mobile phone 100B of a room name before starting P2P communication. In particular, simply making a telephone call from first mobile phone 100A to second mobile phone 100B allows second mobile phone 100B to obtain a room name. This can significantly save time and effort otherwise consumed and made, respectively, by the user of first mobile phone 100A and the user of second mobile phone 100B before they start P2P communication.

Thus the present embodiment provides network system 1 allowing each communication device to create a room name which does not overlap that of another chat room. This liberates the user of each communication device from the burden of creating a room name which does not overlap that of the other chat room. Furthermore, in general, a mail address is identification information that can identify a communication device. As such, it includes a relatively large number of characters, and it is cumbersome for a user to input for each chat room a room name including a first mail address and a second mail address. Network system 1 according to the present embodiment can also save the user's such time and effort.

### <Communication Process in Mobile Phone 100>

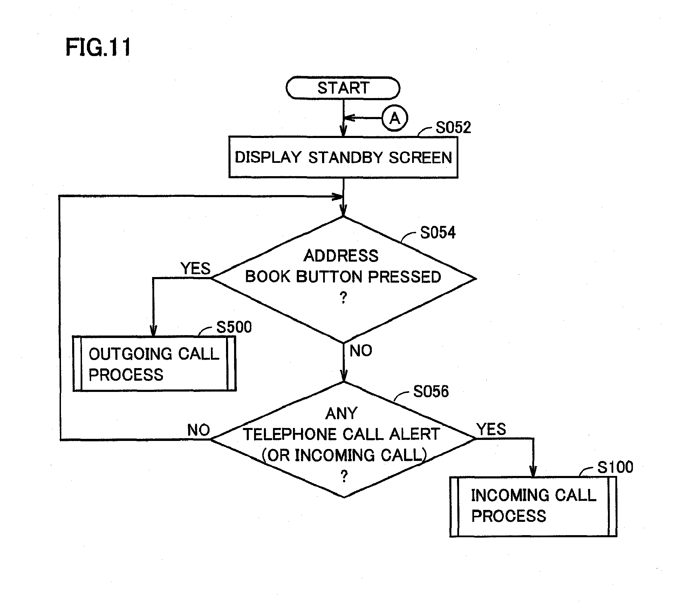

In the present embodiment, mobile phone 100 provides a communication process, as will be described hereinafter. Fig 11 is a flow chart of a procedure of the communication process performed in mobile phone 100 according to the present embodiment.

With reference to Fig 11, processor 106 causes main display 107 to display a standby screen (step S052). Processor 106 determines whether address book button 110D has been operated (step S054). If so (YES in step S054), processor 106 performs an outgoing call process (step S500). The outgoing call process (step S500) will be described later.

If address book button 110D is not operated (NO in step S054), processor 106 determines whether there is any telephone call alert (or any incoming call) (step S056). If so (YES in step S056), processor 106 performs an incoming call process (step S100). The incoming call process (step S100) will be described later. Otherwise (NO in step S056), processor 106 repeats steps S054 et seq.

### <Outgoing Call Process in Mobile Phone 100>

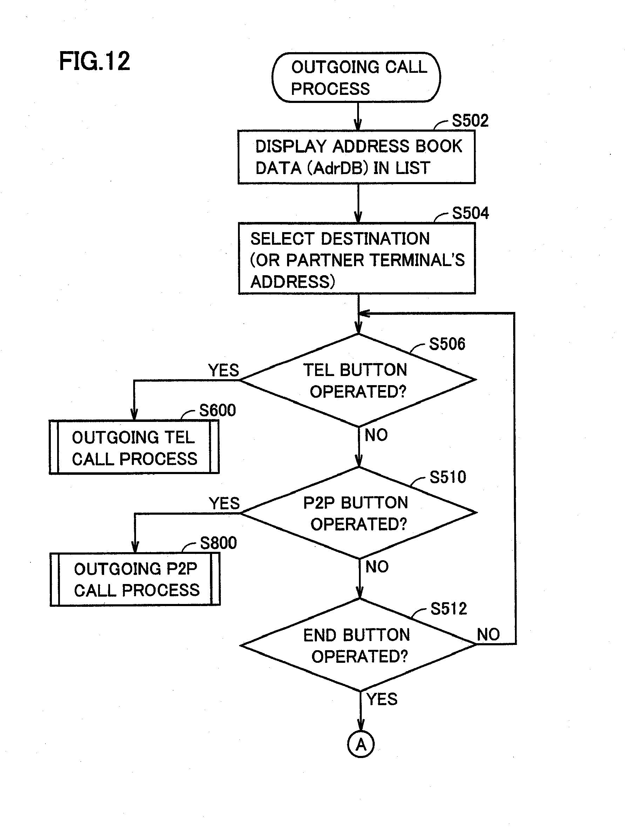

In the present embodiment, mobile phone 100 performs the outgoing call process, as will be described hereinafter. Fig 12 is a flow chart of a procedure of the outgoing call process in mobile phone 100 according to the present embodiment.

With reference to Fig 12, when address book button 110D is operated (YES in step S054), processor 106 causes main display 107 to display an address book in a list based on address book data 103B (step S502). The user selects via input device 110 a communication device of a partner in P2P communication. That is, processor 106 receives an instruction via input device 110 to select the communication device (step S504).

With the partner's communication device having been selected, processor 106 determines whether TEL button 110A has been operated (step S506). If so (YES in step S506), processor 106 performs an outgoing TEL call process (step S600). The outgoing TEL call process (600) will be described later.

If TEL button 110A is not operated (NO in step S506), processor 106 determines whether the P2P button has been operated (step S510). If so (YES in step S51O), processor 106 performs an outgoing P2P call process (step S800).

Otherwise (NO in step S510), processor 106 determines whether end button 110E has been operated (step S512). If so (YES in step S512), processor 106 ends the outgoing call process and repeats step S056 et seq. Otherwise (NO in step 5512), processor 106 repeats step S506 et seq.

### <Outgoing TEL Call Process in Mobile Phone 100>

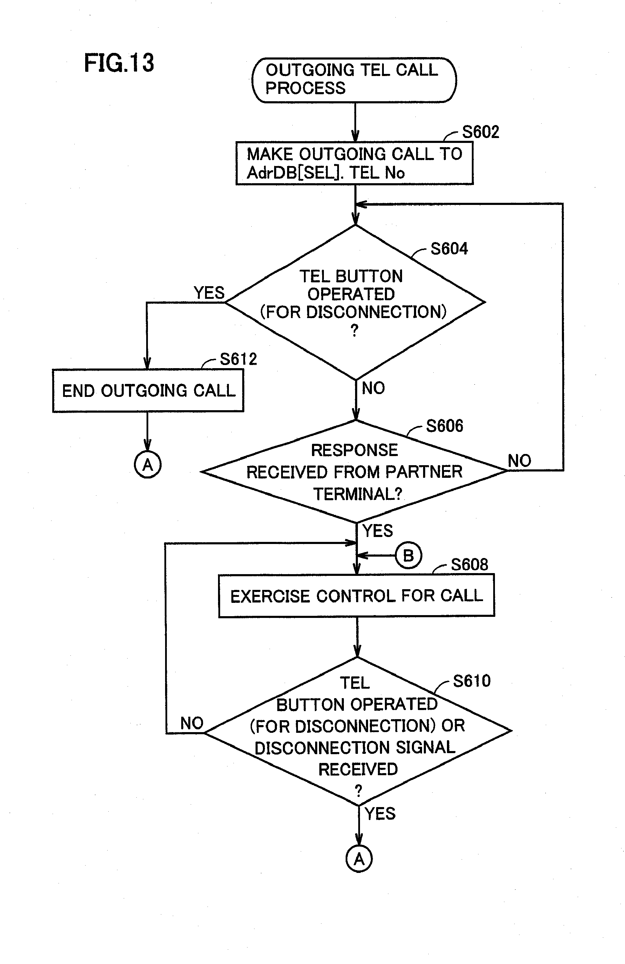

In the present embodiment, mobile phone 100 performs the outgoing TEL call process, as will be described hereinafter. Fig 13 is a flow chart of a procedure of the outgoing TEL call process in mobile phone 100 according to the present embodiment.

With reference to Fig 13, when TEL button 110A is operated (YES in step S506), processor 106 makes an outgoing call through communication interface 102 for TEL to a telephone number corresponding to a memory number stored in SEL (step S602). That is, processor 106 makes a telephone call via communication interface 102 for TEL to a partner communication device selected from the address book.

Processor 106 determines whether TEL button 110A has been operated for disconnection (step S604). If so (YES in step S604), processor 106 interrupts the outgoing TEL call (step 5612) and repeats step S052 et seq. Otherwise (NO in step S604), processor 106 awaits a response from the partner communication device (step S606). If there is no response from the partner communication device (NO in step S606), processor 106 repeats step S604 et seq.

If there is a response from the partner communication device (YES in step S606), processor 106 exercises control for the call (step S608). If TEL button 110A has been operated for disconnection or a disconnection signal has been received (YES in step S310), processor 106 ends the outgoing TEL call process and repeats step S052 et seq. If neither TEL button 110A is operated for disconnection nor a disconnection signal is received (NO in step S610), processor 106 repeats step S608 et seq.

### <Outgoing P2P Call Process in Mobile Phone 100>

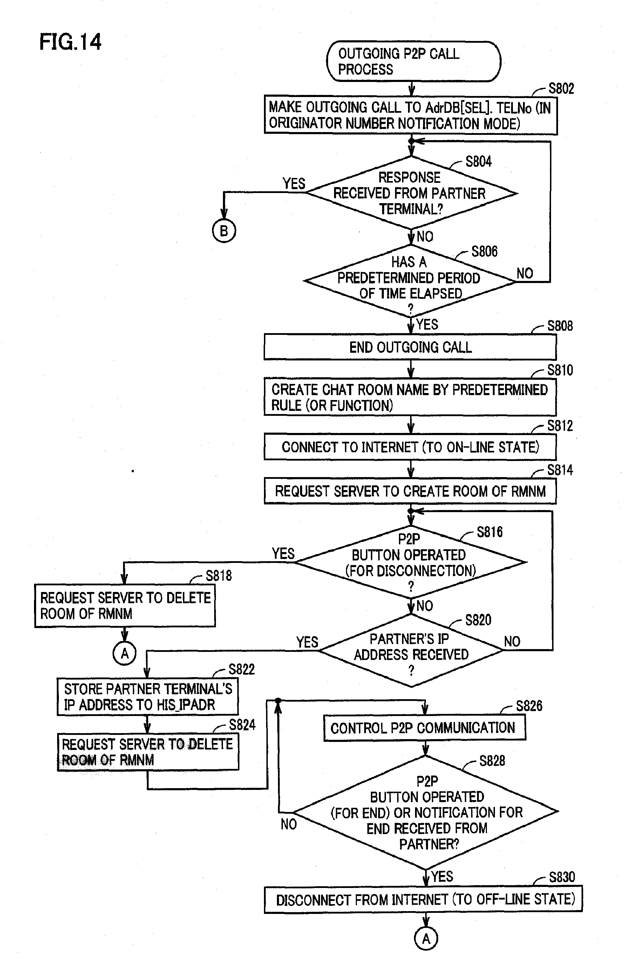

In the present embodiment, mobile phone 100 performs the outgoing P2P call process, as will be described hereinafter. Fig. 14 is a flow chart of a procedure of the outgoing P2P call process in mobile phone 100 according to the present embodiment.

With reference to Fig. 14, if P2P button 110C has been operated (YES in step S510), processor 106 makes an outgoing call to a partner communication device in P2P communication (step S802). At the time, processor 106 adds "186" at the top of a telephone number read from AdrDB[SEL].TELNo, i.e., sets a mode allowing its own terminal's telephone number to be recognized by the partner, and then makes the outgoing call to the partner communication device through communication interface 102 for TEL.

Processor 106 determines whether there is a response from the partner communication device (step S804). If so (YES in step S804), processor 106 repeats step S608 et seq.

Otherwise (NO in step S804), processor 106 determines whether a preset period of time has elapsed since it started the outgoing call (step S806). If not (NO in step S806), processor 106 repeats step S804 et seq. If so (YES in step S806), processor 106 ends the outgoing call (step S808), and then creates a chat room name from a number of AdrDB[SEL].TELNo and that of MyAdr.TELNo in accordance with a predetermined rule (step S81O). For example, processor 106 substitutes a return value of a HASH function, i.e., HASH (AdrDB[SEL].TELNo, MyAdr.TELNo), in RMNM of memory 103.

Processor 106 connects to Internet network 500 through communication interface 101 (step S812). At the time, mobile phone 100 is assigned an IP address. Processor 106 transmits a creation request through communication interface 101 to matching server 400 to create a chat room having a chat room name of RMNM (step S814).

Processor 106 determines whether the P2P button has been operated by the user via input device 110 (step S816). In other words, processor 106 determines whether an instruction has been received from the user to interrupt P2P communication. If so (YES in step S816), processor 106 transmits a deletion request through communication interface 101 to matching server 400 to delete the chat room having the chat room name of RMNM (step S818), and repeats step S052 et seq.

If the user does not operate the P2P button (NO in step S816), processor 106 determines whether the IP address of the partner communication device in P2P communication has been received (step S820). If not (NO in step S820), processor 106 repeats step S816 et seq.

If so (YES in step S820), processor 106 stores that IP address to HIS_IPADR (step S822). Processor 106 transmits a deletion request through communication interface 101 to matching server 400 to delete the chat room having the chat room name of RMNM (step S824), and starts controlling P2P communication (step S826).

Processor 106 determines via input device 110 whether the user has operated the P2P button (or whether notification to end the communication has been received from the partner communication device in P2P communication) (step S828). In other words, processor 106 determines whether an instruction has been received from the user to interrupt P2P communication. If not (NO in step S828), processor 106 repeats step S826 et seq. If so (YES in step S828), processor 106 disconnects from Internet network 500 (step S830).

### <Incoming Call Process in mobile phone 100>

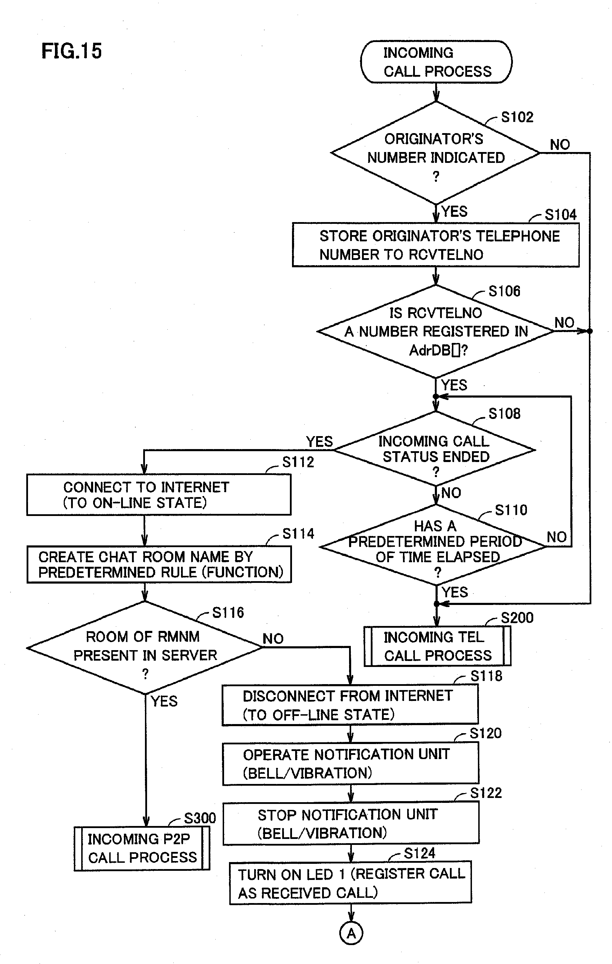

In the present embodiment mobile phone 100 performs the incoming call process, as will be described hereinafter. Fig. 15 is a flow chart of a procedure of the incoming call process in mobile phone 100 according to the present embodiment.

With reference to Fig. 15, if there is any telephone call alert (YES in step S056), processor 106 determines whether the originator's telephone number is indicated (step S102). If not (NO in step S102), processor 106 performs the incoming TEL call process (step S200). The incoming TEL call process will be described later.

If the originator's telephone number is indicated (YES in step S102), processor 106 stores the originator's telephone number to RCVTELNO (step S104). Processor 106 determines whether the number of RCVTELNO matches any number stored in AdrDB[] (step S106). If not (NO in step S106), processor 106 performs the incoming TEL call process (step S200).

If the number of RCVTELNO matches any number stored in AdrDB[] (YES in step S106), processor 106 determines whether the telephone call alert (or a status of an incoming call) ends (step S108). If not, processor 106 determines whether the call alert continues for a preset period of time (step S110). If so (YES in step S110), processor 106 performs the incoming TEL call process (step S200). Otherwise (NO in step S110), processor 106 repeats step S108 et seq.

If the call alert ends before it continues for the preset period of time (YES in step S108), processor 106 connects to Internet network 500 through communication interface 101 (step S112). At the time, mobile phone 100 is assigned an IP address.

Processor 106 creates a chat room name from the number of RCVTELNO and that of MyAdr.TELNo in accordance with a predetermined rule (step S114). For example, processor 106 substitutes a return value of a HASH function, i.e., HASH (RCVTELNO, MyAdr.TELNo), in RMNM.

Processor 106 inquires of matching server 400 through communication interface 101 whether there exists a chat room having a chat room name stored in RMNM (step S116). If so (YES in step S116), processor 106 performs an incoming P2P call process (step S300). The incoming P2P call process (step S300) will be described later.

It there does not exist a chat room having a chat room name stored in RMNM (NO in step S116), processor 106 disconnects from Internet network 500 through communication interface 101 (step S118). Processor 106 operates first notification unit 111 only for a predetermined period of time (step S 120), and thereafter stops first notification unit 111 (step S122). Processor 106 turns on second notification unit 112 (step S124), and repeats step S052 et seq.

### < Incoming TEL Call Process in Mobile Phone 100>

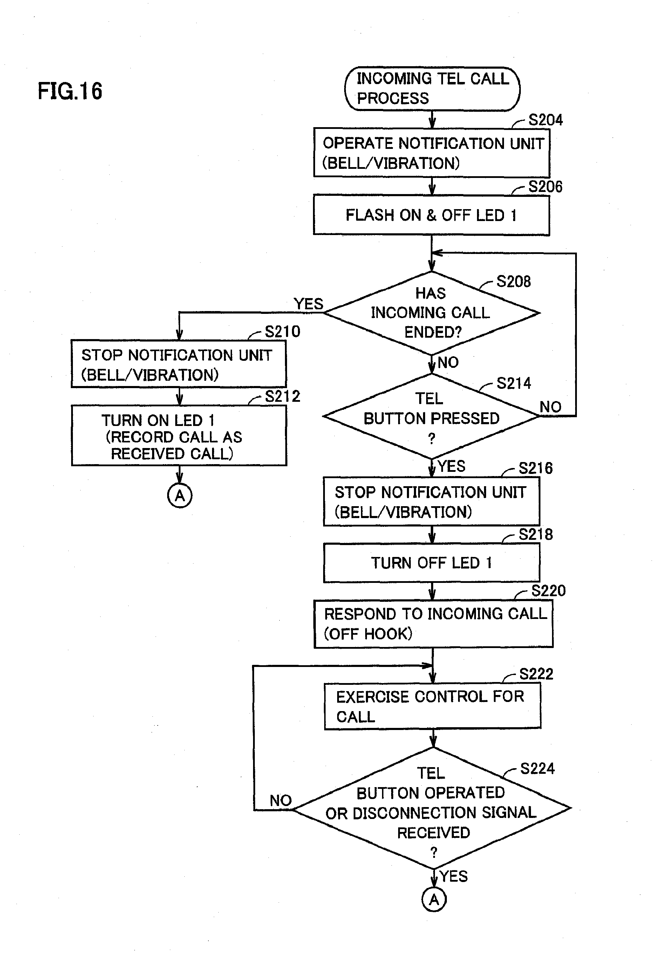

In the present embodiment mobile phone 100 performs the incoming TEL call process, as will be described hereinafter. Fig. 16 is a flow chart of a procedure of the incoming TEL call process in mobile phone 100 in the present embodiment.

With reference to Fig. 16, when there is a telephone call alert (YES in step S056), processor 106 operates first notification unit 111 (step S204), and flashes on/off LED 112A for TEL (step S206).

Processor 106 determines whether the incoming call has ended (step S208). If so (YES in step S208), processor 106 stops notification unit 111 (step S210). Processor 106 turns on LED 112A for TEL (step S212), and repeats step S052 et seq.

Otherwise (NO in step S208), processor 106 determines whether TEL button 110A has been operated (step S214). If not (NO in step S214), processor 106 repeats step S208 et seq. If so (YES in step S214), processor 106 stops first notification unit 111 (step S216), and turns off LED 112A for TEL (step S218).

Processor 106 shifts to a reception response mode, i.e., an on-hook mode (step S220), and then exercises control over the call (step S222). Processor 106 determines whether TEL button 110A has been operated (whether a disconnection signal has been received) (step S224). If so (YES in step S224), processor 106 ends the incoming TEL call process and repeats step S052 et seq. If neither TEL button 110A is operated nor the disconnection signal is received (NO in step S224), processor 106 repeats step S222 et seq.

### < Incoming P2P Call Process in Mobile Phone 100>

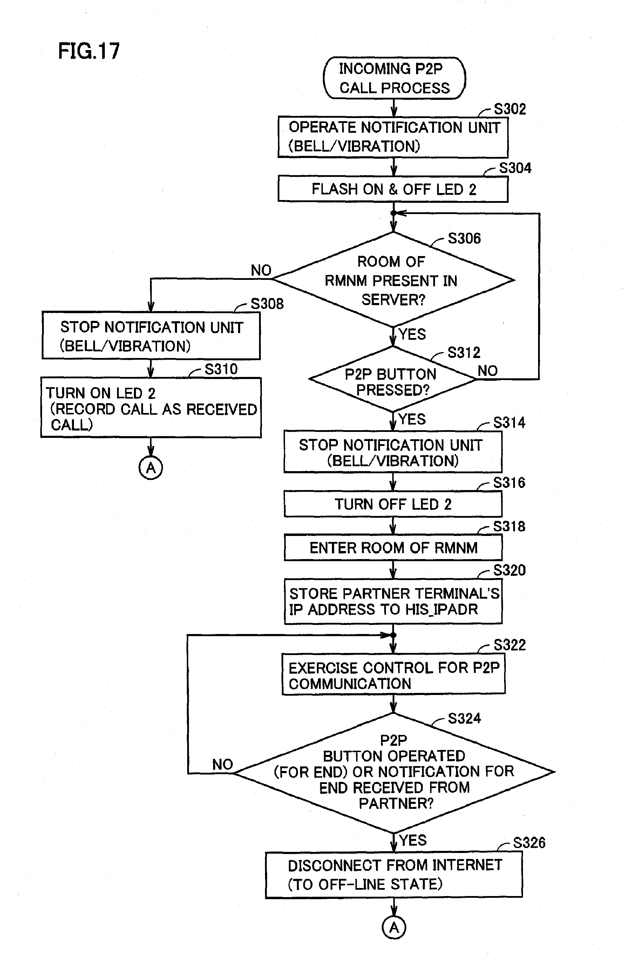

In the present embodiment mobile phone 100 performs the incoming P2P call process, as will be described hereinafter. Fig. 17 is a flow chart of a procedure of the incoming P2P call process in mobile phone 100 in the present embodiment.

With reference to Fig. 17, if in matching server 400 there exists a chat room having a chat room name of RMNM (YES in step S116), processor 106 operates first notification unit 111 (step S302), and flashes on/off LED 112B for P2P (step S304). Processor 106 inquires of matching server 400 through communication interface 101 whether there exists a chat room having the chat room name of RMNM (step S306). In other words, processor 106 determines whether a chat room having the chat room name of RMNM of matching server 400 has been closed.

It there does not exist a chat room having the chat room name of RMNM (NO in step S306), processor 106 stops notification unit 111 (step S308). Processor 106 turns on LED 112B for P2P (step S310), and repeats S052 et seq. At the time, processor 106 records the call in memory 103 as a received call.

If there exists a chat room having the chat room name of RMNM (YES in step S306), processor 106 waits for an instruction input via input device 110 by the user operating the P2P button (step S312). If an instruction is not input to perform P2P communication (NO in step S312), processor 106 repeats step S306 et seq.

If an instruction is input via input device 110 to perform P2P communication, i.e., if the user inputs an instruction to enter the chat room (YES in step S312), processor 106 stops first notification unit 111 (step S314), and turns off LED 112B for P2P (step S316).

Processor 106 enters a chat room of matching server 400 through communication interface 101 (step S318). More specifically, processor 106 transmits a request through communication interface 101 to matching server 400 for entering the room, and obtains from matching server 400 the IP address of a partner in P2P communication. Processor 106 stores the partner's IP address to HIS_IPADR (step S320), and exercises control over P2P communication (step S322).

Processor 106 determines via input device 110 whether the user has operated the P2P button (or whether notification to end the communication has been received from the partner communication device in P2P communication) (step S324). In other words, processor 106 determines whether an instruction has been received from the user to interrupt P2P communication. If not (NO in step S324), processor 106 repeats step S322 et seq. If so (YES in step S324), processor 106 disconnects from Internet network 500 (step S326). In other words, processor 106 ends the incoming P2P call process and then repeats step S056 et seq.

### <Response Process in Matching Server 400>

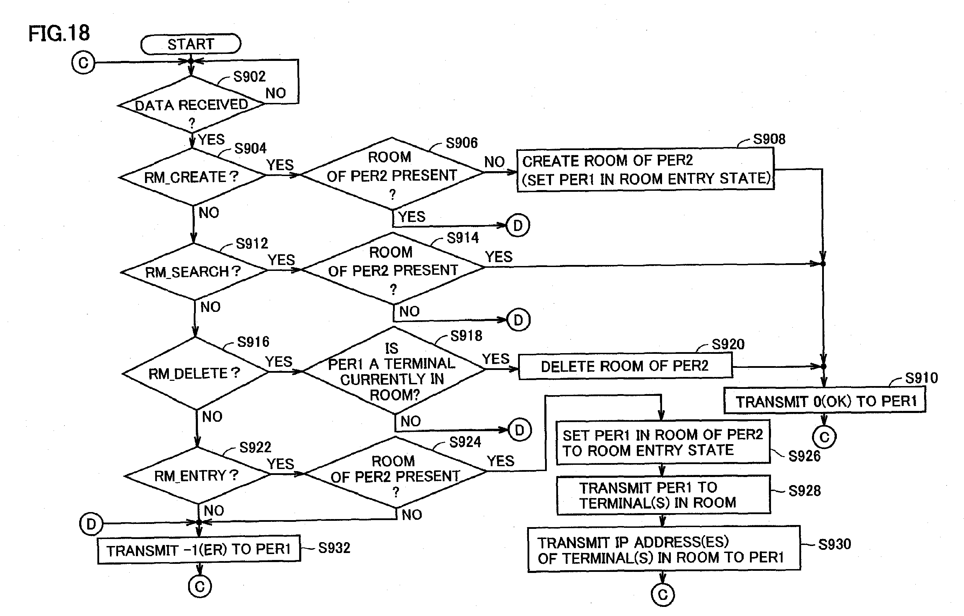

In the present embodiment, matching server 400 provides a response process, as will be described hereinafter. Fig. 18 is a flow chart of a procedure of the response process in matching server 400 according to the present embodiment.

With reference to Fig. 18, the matching server 400 CPU 405 waits for a message received from first mobile phone 100A through server communication interface 409 (step S902). When CPU 405 receives a message from first mobile phone 100A (YES in step S902), CPU 405 determines whether the message is a creation request to create a chat room (step S904).

If so (YES in step S904), CPU 406 determines whether the creation request includes a room name existing in room management table 406A (step S906). If so (YES in step S906), CPU 406 issues notification that creating the room has failed (step S932), and the CPU repeats step S902 et seq.

IF the room name does not exist in room management table 406A (NO in step S906), CPU 406 creates a room having the room name (step S908). More specifically, CPU 406 stores the room name and the IP address of the caller included in the creation request to room management table 406A in association with each other. CPU 406 issues to the caller's IP address a notification indicating that the room has successfully been created (step S910).

If the message is not a creation request to create a chat room (NO in step S904), CPU 406 determines whether the message is a search request to search for a room name (step S912).

If so (YES in step S912), the CPU determines whether the search request includes a room name existing in room management table 406A (step S914). If so (YES in step S914), CPU 406 issues to the requester's IP address a notification indicating that the room has been found (step S910), and the CPU repeats step S902 et seq.

If the room name does not exist in room management table 406A (NO in step S914), CPU 406 issues to the requester's IP address a notification indicating that the room has not been found (step S932), and the CPU repeats step S902 et seq.

If the message is not a search request to search for a chat room (NO in step S912), CPU 406 determines whether the message is a deletion request to delete a chat room (step S916).

If so (YES in step S916), CPU 406 determines whether the requester's IP address is stored in room management table 406A in association with a room name included in the deletion request (step S918). More specifically, CPU 406 determines whether the requester's communication device is a communication device having entered the chat room. If so (YES in step S918), CPU 406 deletes the chat room having the room name (step S920). CPU 406 issues to the requester's IP address a notification indicating that the chat room has successfully been deleted (step S910), and the CPU repeats step S902 et seq.

If the requester's IP address is stored in room management table 406A in association with the room name included in the deletion request (NO in step S918), CPU 406 issues to the requester's IP address a notification indicating that deleting the chat room has failed (step S932), and the CPU repeats step S902 et seq.

If the message is not a deletion request to delete a chat room (NO in step S916), CPU 406 determines whether the message is a room entry request for entering a chat room (step S922).

If so (YES in step S922), CPU 406 determines whether the room entry request includes a room name stored in room management table 406A (step S924). If so (YES in step S924), CPU 406 registers the requester's IP address in room management table 406A in association with the room name (step S926).

CPU 406 transmits the requester's IP address through server communication interface 409 to the IP address(es) having been registered in room management table 406A in association with the room name (step S928). CPU 406 transmits to the requester's IP address through server communication interface 409 the IP address(es) having been registered in room management table 406A in association with the room name (step S930).

Subsequently, CPU 406 repeats step S902 et seq. If the message is not a room entry request for entering a chat room (NO in step S922), or if the room entry request does not include a room name stored in room management table 406A (NO in step S924), CPU 406 transmits an error message to the requester's IP address (step S932), and the CPU repeats step S902 et seq.

Thus in the present embodiment network system 1 has been described as a type such that each communication device performs a call process, an outgoing call process s and the like for another communication device, while the communication device does not concurrently perform a data communication process for matching server 400, a P2P communication process for the other communication device, and the like. However, the above described technique is also applicable to network system 1 of a type allowing each communication device to perform these processes concurrently (or in a time division manner or a frequency division manner).

It is needless to say that the present invention is also applicable to a case achieved by providing a system or a device with a program. The present invention's effect can also be exploited in such a manner that a storage medium having stored therein a program represented by software for achieving the present invention is provided to a system or a device and a computer (or CPU or MPU) of the system or device reads and executes a program code stored in the storage medium.

In that case, the program code per se read from the storage medium will implement the function of the above described embodiment, and the storage medium having the program code stored therein will configure the present invention.

The storage medium for providing the program code can for example be a hard disc, an optical disc, a magneto-optical disc, a CD-ROM, a CD-R, a magnetic tape, a non-volatile memory card (an IC memory card), ROMs (mask ROM, flash EEPROM, or the like), or the like.

Furthermore, it is needless to say that not only can the program code read by the computer be executed to implement the function of the above described embodiment, but a case is also included in which in accordance with the program code's instruction an operating system (OS) running on the computer performs an actual process partially or entirely and that process implements the function of the above described embodiment.

Furthermore, it is also needless to say that a case is also included in which the program code read from the storage medium is written to memory included in a feature expansion board inserted in a computer or a feature expansion unit connected to the computer, and subsequently, in accordance with the program code's instruction, a CPU included in the feature expansion board or the feature expansion unit performs an actual process partially or entirely and that process implements the function of the above described embodiment.

It should be understood that the embodiments disclosed herein are illustrative and non-restrictive in any respect. The scope of the present invention is defined by the terms of the claims, rather than the description above, and is intended to include any modifications within the scope and meaning equivalent to the terms of the claims.

### DESCRIPTION OF THE REFERENCE SIGNS

1: network system; 100, 100A, 100B, 100C: mobile phone; 101, 102, 105: communication interface; 103, 103-1, 103-2: memory; 103A, 103A-1, 103A-2: working memory; 103B, 103B-1, 103B-2: address book data; 103C, 103C-1, 103C-2: data of terminal of interest; 103D, 103D-1, 103D-2: IP address data; 106, 106-1, 106-2: processor; 1061, 1061-1, 1061-2: creation unit; 1062, 1062-1, 1062-2: communication control unit; 107: main display; 108: microphone; 109:speaker; 110, 110-1, 110-2: input device; 200: car navigation device; 300: personal computer; 400: matching server; 4051: room creation unit; 4052: room entry unit; 4053: room deletion unit; 406:memory; 406A: room management table; 407: fixed disc; 408: internal bus; 409: server communication interface; 500: Internet network; 700: carrier network.

## Claims

1. A network system (1) comprising first and second communication devices (100A, 100B) and a server device (400),
said first communication device including
a first communication interface (101-1) for transmitting and receiving data to and from said second communication device and said server device via a network,
a first memory (103-1) for storing first and second identification information for identifying said first and second communication devices,
a first creation unit (1061-1) for creating a room name based on at least one of said first and second identification information, and
a first communication control unit (1062-1) for connecting to said second communication device through said first communication interface in accordance with said second identification information, and transmitting a creation request through said first communication interface to said server device to create a room having said room name for allowing said first and second communication devices to exchange information,
said first communication control unit being operative in response to a first external instruction to transmit a deletion request through said first communication interface to said server device to delete said room having said room name,
said server device including
a server communication interface (409) for transmitting and receiving data to and from said first and second communication devices via said network,
a room creation unit (4051) operative in response to said creation request received from said first communication device for creating said room having said room name, and
a room deletion unit (4053) operative in response to said deletion request received from said first communication device for deleting said room having said room name,
said second communication device including
a second communication interface (101-2) for transmitting and receiving data to and from said first communication device and said server device via said network,
a second memory (103-2) for storing said first and second identification information,
a second creation unit (1061-2) for creating a room name based on at least one of said first and second identification information when there is access by said first communication device,
a second communication control unit (1062-2) for inquiring of said server device through said second communication interface whether said room having said room name exists in said server device, and
an input device (110-2) for receiving a second external instruction while said room exists,
said second communication control unit being operative in response to said second external instruction to access said room having said room name through said second communication interface.

2. A communication device comprising:
a communication interface for transmitting and receiving data to and from another communication device and a server device via a network;
a memory for storing first and second identification information for identifying the communication device and said other communication device;
a creation unit for creating a room name based on at least one of said first and second identification information; and
a communication control unit for connecting to said other communication device through said communication interface in accordance with said second identification information, and for transmitting a creation request through said communication interface to said server device to create a room having said room name for allowing the communication device and said other communication device to exchange information,
said communication control unit being operative in response to a first external instruction to transmit a deletion request through said communication interface to said server device to delete said room having said room name.

3. The communication device according to claim 2,
said creation unit creating said room name based on said at least one of said first and second identification information when there is access by said other communication device, and
said communication control unit inquiring of said server device through said communication interface whether said room having said room name exists in said server device, the communication device further comprising
an input device for receiving a second external instruction while said room exists,
wherein
said communication control unit is operative in response to said second external instruction to access said room having said room name through said communication interface.

4. A communication device comprising:
a communication interface for transmitting and receiving data to and from another communication device and a server device via a network;
a memory for storing first and second identification information for identifying the communication device and said other communication device;
a creation unit for creating a room name based on at least one of said first and second identification information when there is access by said other communication device;
a communication control unit for inquiring of said server device through said communication interface whether a room having said room name exists in said server device; and
an input device for receiving a second external instruction while said room exists, said communication control unit being operative in response to said second external instruction to access said room having said room name through said communication interface.

5. The communication device according to claim 4, said access by said other communication device being an incoming telephone call, the communication device further comprising a notification unit for externally issuing a first notification while said room exists, and for externally issuing a second notification while said room does not exist, wherein:
said input device externally receives a third external instruction for responding to an incoming telephone call when said room does not exist; and
said communication control unit operates in response to said third external instruction to control said communication interface for having a call with said other communication device.

6. A communication method performed in a communication device for communicating with another communication device, said communication device including
a processor,
a communication interface for transmitting and receiving data to and from said other communication device and a server device via a network, and
a memory for storing first and second identification information for identifying said communication device and said other communication device, the method comprising the steps of:
said processor creating a room name based on at least one of said first and second identification information;
said processor connecting to said other communication device through said communication interface in accordance with said second identification information;
said processor transmitting a creation request through said communication interface to said server device to create a room having said room name for allowing said communication device and said other communication device to exchange information; and
said processor operating in response to a first external instruction to transmit a deletion request through said communication interface to said server device to delete said room having said room name.

7. A communication method performed in a communication device for communicating with another communication device, said communication device including
a processor,
a communication interface for transmitting and receiving data to and from said other communication device and a server device via a network, and
a memory for storing first and second identification information for identifying said communication device and said other communication device, the method comprising the steps of:
said processor creating a room name based on at least one of said first and second identification information when there is access by said other communication device;
said processor inquiring of said server device through said communication interface whether a room having said room name exists in said server device;
said processor receiving a second external instruction while said room exists; and
said processor operating in response to said second external instruction to access said room having said room name through said communication interface.

8. A communication program for causing a communication device to communicate with another communication device, said communication device including
a processor,
a communication interface for transmitting and receiving data to and from said other communication device and a server device via a network, and
a memory for storing first and second identification information for identifying said communication device and said other communication device, the communication program causing said processor to perform the steps of:
creating a room name based on at least one of said first and second identification information;
connecting to said other communication device through said communication interface in accordance with said second identification information;
transmitting a creation request through said communication interface to said server device to create a room having said room name for allowing said communication device and said other communication device to exchange information; and
operating in response to a first external instruction to transmit a deletion request through said communication interface to said server device to delete said room having said room name.

9. A communication program for causing a communication device to communicate with another communication device, said communication device including
a processor,
a communication interface for transmitting and receiving data to and from said other communication device and a server device via a network, and
a memory for storing first and second identification information for identifying said communication device and said other communication device, the communication program causing said processor to perform the steps of:
creating a room name based on at least one of said first and second identification information when there is access by said other communication device;
inquiring of said server device through said communication interface whether said room having said room name exists in said server device;
receiving a second external instruction while said room exists; and
operating in response to said second external instruction to access said room having said room name through said communication interface.
